# EUROPEAN PATENT APPLICATION

(11) **EP 2 704 057 A2**
(43) Date of publication of application: **05.03.2014**
(21) Application number: 13181706.6
(22) Date of filing: 26.08.2013
(51) Int. Cl.: G06K 9/00

(54) **Gesture recognition apparatus, control method thereof, display instrument, and computer readable medium**

(30) Priority: 31.08.2012 JP 2012192039
(71) Applicant: OMRON CORPORATION, Kyoto-shi, Kyoto 600-8530 (JP)
(72) Inventor: Yamashita, Takayoshi, Kyoto, 600-8530 (JP)
(74) Representative: Isarpatent

(57) **Abstract**

A gesture recognition apparatus for recognizing a gesture of a user from a moving image in which the user is photographed is provided, the gesture recognition apparatus comprising: a determination part configured to determine a type of the gesture; and a recognition area definition part configured to define a recognition area, which is an area where the gesture is recognized in a whole area of the moving image, based on the type of the gesture determined by the determination part.

## Description

### TECHNICAL FIELD

The present invention relates to a gesture recognition apparatus that recognizes a gesture from action of a user, a control method thereof, a display instrument, and a computer readable medium.

### BACKGROUND ART

Recently a display instrument, in which a display device such as a television receiver, a personal computer, and a tablet terminal is combined with a gesture recognition apparatus that recognizes a gesture of a recognition-target object operated by an operator, appears on the scene. In the display instrument, there is a demand for the gesture recognition apparatus, which recognizes the gesture made using an operator's hand or finger such that necessity for the operator to wear a special accessory such as a data glove is eliminated and such that the operator naturally and smoothly performs an operation to the display instrument.

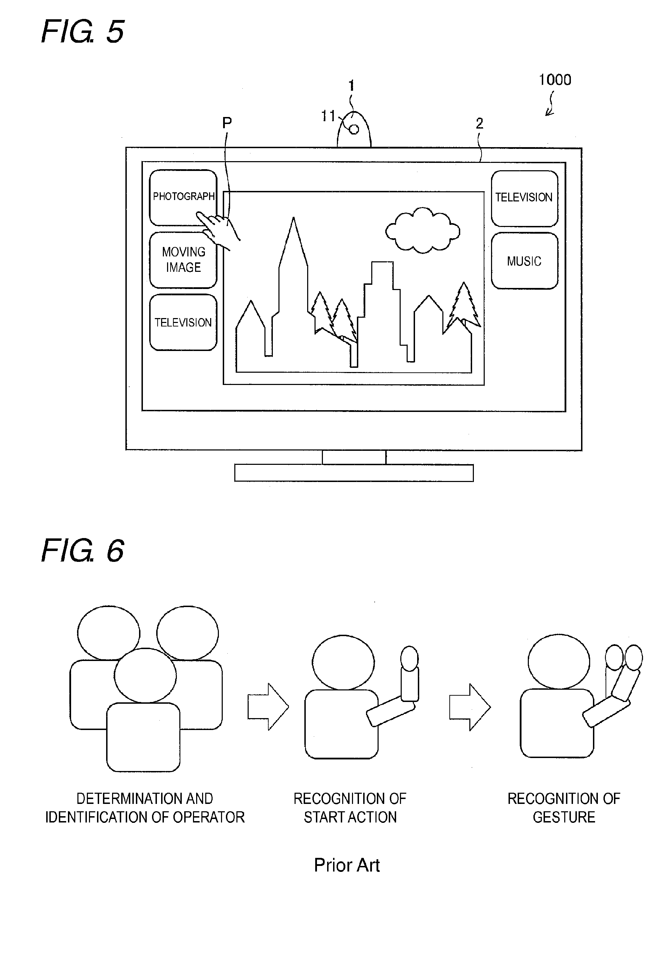

A flow of the gesture recognition in the conventional gesture recognition apparatus will be described with reference to Fig. 6. As illustrated in Fig. 6, in the conventional gesture recognition, at first the operator is identified or determined. That is, the gesture recognition apparatus determines which one of a plurality of recognized persons is set to the operator or determines whether the recognized person is included in a previously-registered operator list. Then the operator transmits a start of the gesture to the gesture recognition apparatus. Specifically, for example, when the operator performs a start action such that the operator raises the operator's hand, the gesture recognition apparatus recognizes the start action to be ready to perform the gesture recognition of a recognition-target object (for example, the operator's hand and a pointer). Then the gesture recognition apparatus recognizes the gesture that is made by the operator using the recognition-target object after the start action.

When the gesture recognition of the recognition-target object is performed in the gesture recognition apparatus, in order to reduce a processing load, not the gesture recognition is performed to the whole area of the image photographed by the photographing part, but sometimes a portion of the area of the image is set as a recognition area to perform the gesture recognition in the recognition area.

For example, Japanese Unexamined Patent Publication No. 2003-216955 (published on July 31, 2003) discloses a gesture recognition apparatus that extracts a skin color area from moving image data and calculates a face area using a template of a face shape. In the gesture recognition apparatus, a range where the gesture is possibly made is restricted using a horizontal width, a vertical length and a size of the calculated face area, and the gesture recognition is performed only in the restricted area.

WO2003/025859 (published on March 27, 2003) describes an information integration recognition apparatus that three-dimensionally specifies a user's position in an indoor space by photographing the user with a stereo camera and extracts a recognition target area such as a head and a hand of the user based on user's distance information (x, y, z) acquired from the stereo camera. In the description of WO2003/025859, when the recognition target area is extracted, a target, which projects from a floor surface and is not fixed in the room, is sequentially extracted from the highest level with a 64-by-64 pixel size in a visual field of each camera, and the extracted target is used as the recognition target.

In the case that the user makes the gesture with the user's hand as the recognition-target object, the proper range and the proper position of the recognition area depend on the user. For example, a larger recognition area is suitable for an adult user, and a smaller recognition area is suitable for a child user. The position of the recognition area relative to the user's face varies in each user because of the different arm length of the user.

However, in the technologies disclosed in Japanese Unexamined Patent Publication No. 2003-216955 and WO2003/025859, the gesture recognition apparatus or the information integration recognition apparatus determines the recognition target area. That is, the user cannot set the recognition area suitable for the user, and correct the recognition area according to a situation. There is a problem that sometimes the user cannot perform the comfortable gesture.

In view of the problems described above, it is desirable to provide a gesture recognition apparatus in which the user can define the recognition area.

### SUMMARY

In accordance with one aspect of at least one embodiment of the present invention, a gesture recognition apparatus for recognizing a gesture of a user from a moving image in which the user is photographed, comprises: a determination part configured to determine a type of the gesture; and a recognition area definition part configured to define a recognition area, which is an area where the gesture is recognized in a whole area of the moving image, based on the type of the gesture determined by the determination part.

In accordance with another aspect of at least one embodiment of the present invention, a method for controlling a gesture recognition apparatus that recognizes a gesture of a user from a moving image in which the user is photographed, the method comprises: determining a type of the gesture; and defining a recognition area, which is an area where the gesture is recognized in a whole area of the moving image, based on the type of the determined gesture.

### BRIEF DESCRIPTION OF THE DRAWINGS

Fig. 1 is a block diagram illustrating a configuration of a gesture recognition apparatus according to a first embodiment of the present invention;
Fig. 2A is a schematic diagram illustrating start action to wave a hand, and Fig. 2B illustrates an accumulated value in which a difference between moving images, in each of which action to wave an operator's hand is photographed, is accumulated in a moving image area Z in Fig. 2A;
Fig. 3 is a schematic diagram illustrating an operator who performs a gesture using fingers;
Fig. 4 is a flowchart illustrating the action of the gesture recognition apparatus in Fig. 1;
Fig. 5 is a view illustrating an appearance of a display instrument to which the gesture recognition apparatus in Fig. 1 is applied; and
Fig. 6 is a view illustrating a flow of gesture recognition in general.

### DETAILED DESCRIPTION

Hereinafter, embodiments of the present invention will be described in detail. Hereinafter, "right" and "left" are directions viewed from an operator who visually recognizes a moving image.

### [First embodiment]

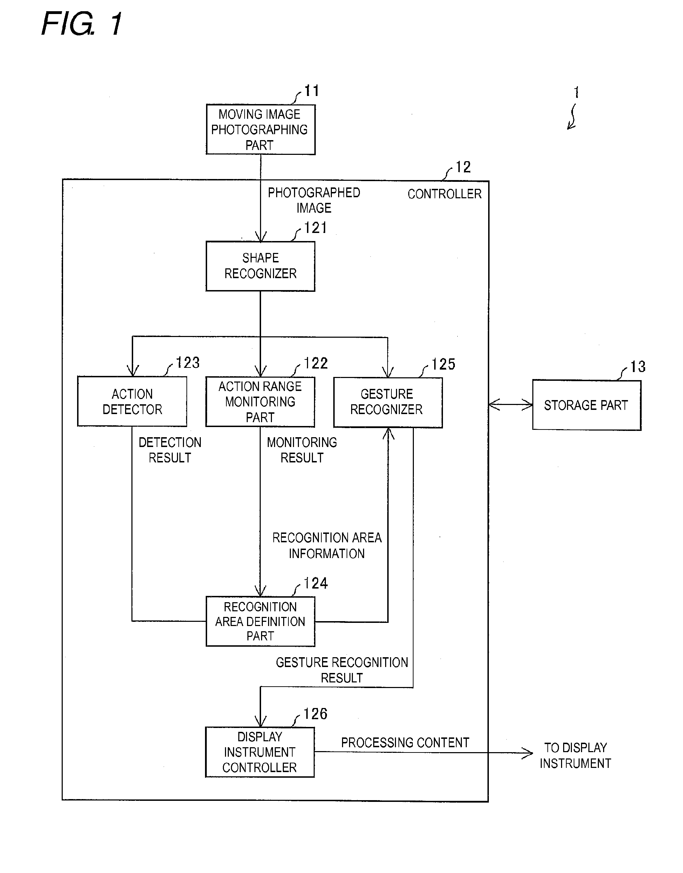

A gesture recognition apparatus 1 according to a first embodiment of the present invention will be described below with reference to Figs. 1 to 4.

### (Configuration of gesture recognition apparatus 1)

A configuration of the gesture recognition apparatus 1 will be described with reference to Fig. 1. Fig. 1 is a block diagram illustrating the configuration of the gesture recognition apparatus 1.

As illustrated in Fig. 1, the gesture recognition apparatus 1 includes a moving image photographing part 11, a controller 12, and a storage part 13. Details of each member will be described below.

### (1. Moving image photographing part 11)

The moving image photographing part 11 photographs a spatial image including the operator. More particularly, the moving image photographing part 11 photographs the operator who is a main body performing a gesture and a user's hand (a recognition-target object) that becomes a target of gesture recognition, and generates moving image data. The moving image photographing part 11 transmits a photographed frame image to the controller 12 at regular intervals of a predetermined time (for example, 1/15 second).

### (2. Controller 12)

The controller 12 wholly controls each part included in the gesture recognition apparatus 1, and the controller 12 includes a shape recognizer (determination part) 121, an action range monitor 122, an action detector 123, a recognition area definition part 124, a gesture recognizer 125, and a display instrument controller 126. The detail of each part included in the controller 12 is described later.

### (3. Storage part 13)

Various pieces of data handled by the gesture recognition apparatus 1 are stored in the storage part 13, and the storage part 13 includes a temporary storage part in which the data is temporarily stored and a storage device in which the data is stored in a nonvolatile manner. The temporary storage part is what is called a working memory in which the data used in calculation and a calculation result are temporarily stored in a process of various pieces of processing performed by the gesture recognition apparatus 1. For example, the temporary storage part includes a RAM. A control program and an OS program, which are executed by the controller 12, and various pieces of data to be read in performing various functions included in the gesture recognition apparatus 1 are stored in the storage device. For example, the storage device includes a ROM.

The content of the following three is stored in the storage part 13.
1. A hand shape list including hand shapes 1 to 3 described later
2. A recognition area correction table in which an orientation and/or a displacement of the hand having the hand shape 2 is correlated with a correction content of a recognition area OE
3. A gesture-processing content correspondence table that indicates a processing content performed by the controller 12 in each type of the gesture when a certain gesture is recognized
The recognition area OE is an area where the gesture is recognized in the whole area of the moving image based on the type of the gesture made by the user using the hand.

### (Detailed configuration of controller 12)

The detailed configuration of the controller 12 will be described below with reference to Figs. 1 to 3.

### (1. Shape recognizer 121)

The shape recognizer 121 identifies the following three shapes 1 to 3 as the hand shape of the operator.
Shape 1: the hand in which five fingers (that is, all the fingers) are stretched
Shape 2: the hand in which two fingers (for example, an index finger and a middle finger) are stretched
Shape 3: the hand in which one finger (for example, the index finger) is stretched (Hand shape recognition method)
The following three methods may be exemplified as the hand shape recognition method.

First, a template is produced in each hand shape and the hand shape photographed in the moving image is recognized by template matching method.

Second, a plurality of samples prepared for each hand shape is learned by a statistical learning method, and the hand shape photographed in the moving image is determined from a degree of similarity by calculating the degree of similarity between the learned hand shape and the hand shape photographed in the moving image.

Third, one decision tree (a classifier) such as randomized trees is learned by multiclass classification (multiclass segmentation), and a class of the hand shape photographed in the moving image is decided by the learned decision tree.

### (Template matching)

The template matching means a method for calculating a degree of coincidence (matching) between a sample such as the photographed moving image and a previously-prepared model.

A flow of the hand shape recognition using the template matching method will briefly be described below.
For the purpose of the template matching, a template of each of hand shapes 1 to 3 is previously stored in the storage part 13.

The action detector 123 extracts a skin color area that is an area having a skin color of the human from the recognition area OE. Therefore, the hand of the operator existing in the recognition area OE is extracted. Then the action detector 123 performs the template matching of the templates of the shapes 1 to 3 previously stored in the storage part 13 with respect to the shape of the extracted skin color area. As a result of the template matching, the action detector 123 determines one of the shapes 1 to 3 having the highest degree of similarity to the shape of the skin color area as the hand shape recognized from the skin color area. However, the action detector 123 determines that the shapes 1 to 3 are not matched with the hand shape when the degree of similarity between the shape of the skin color area and each template is less than a predetermined value.

### (2. Action range monitor 122)

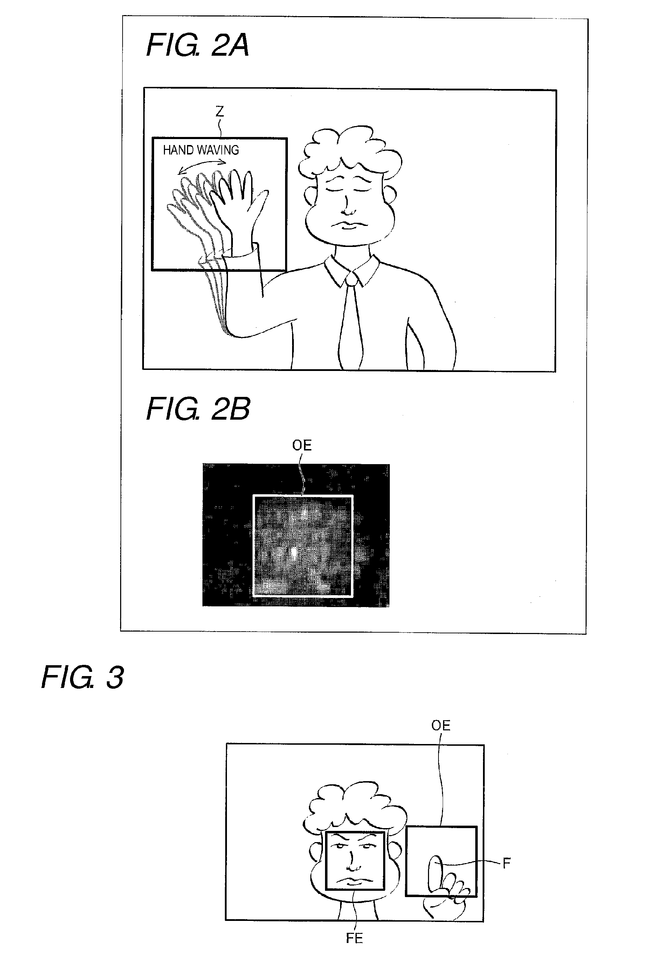

While the operator makes the gesture using the hand having the shape 3, the action range monitor 122 monitors whether an action range where a leading end portion of the hand, namely, an index finger leading end F (see Fig. 3) moves goes out from the recognition area OE. In other words, the action range monitor 122 monitors whether the index finger leading end F transverses each side of a quadrangle that is of a boundary of the recognition area OE from an inside to an outside of the recognition area OE.

In the case that the operator makes the gesture with the hand (the shape 3) in which only the index finger is stretched like the first embodiment, the action range monitor 122 extracts the index finger leading end F. However, the present invention is not limited to this. Alternatively, for example, in the case that the operator makes the gesture with a hand having a shape other than the shape 3, the action range monitor 122 may determine whether a specific region of the hand goes out from the recognition area OE.

### (Extraction of index finger leading end F)

A process of extracting the index finger of the hand after the hand of the operator is extracted is undergone in order to extract the index finger leading end F. A foreground of the moving image is extracted in the recognition area OE in order to extract the operator's hand from the moving image. Therefore, the operator's hand located closest to the moving image photographing part 11 is extracted when making the gesture. Alternatively, the area having the skin color may be extracted in the recognition area OE. An area of elongated shape, in which the length of the continuous skin color in the longitudinal direction is greater than or equal to a predetermined value while the length of the continuous skin color in the crosswise direction is less than the predetermined value, may be extracted in order to extract the index finger from the operator's hand. Therefore, the index finger is extracted in the case that the hand in which only the index finger is stretched is the recognition-target object. The index finger leading end F is extracted when the leading end portion of the extracted area having the elongated shape is further extracted.

### (3. Action detector 123)

The action detector 123 detects setting action and correction action, which are performed by the operator who forms the hand shape 1 or 2. As used herein, the setting action and the correction action means action that is performed by the operator in order to set or correct the recognition area OE (see Fig. 3) that is the area where the gesture is recognized in the whole area of the moving image. The setting action and the correction action, which are detected by the action detector 123, are described below.
Setting action: the action in which the operator waves the hand having the shape 1, namely, the hand in which all the fingers are stretched
Correction action: the action in which the operator forms the shape 2, namely, the hand in which the index finger and the middle finger are stretched, and orients the stretched fingers toward a predetermined direction. For example, the predetermined direction may be a horizontal direction, a vertical direction, or an oblique direction.

Particularly, as illustrated in Fig. 2A, the action of hand waving in the setting action is action in which the operator waves the hand (in one of the horizontal direction and the vertical direction) while orienting a palm of the hand in which all the fingers are stretched to the gesture recognition apparatus 1 (the moving image photographing part 11).

In the correction action, the action detector 123 may be configured to detect that the hand is displaced in a predetermined direction instead of detecting that the stretched fingers are oriented toward the predetermined direction. In this case, the correction action becomes "the action in which the operator forms the shape 2, namely, the hand in which the index finger and the middle finger are stretched, and displaces the hand in the predetermined direction".

The setting action and the correction action are not limited to the first embodiment. The setting action and the correction action may be defined by the hand shape (for example, the number of stretched fingers), the hand orientation (for example, the orientation of the stretched finger), and the hand displacement (for example, an amount of the displacement).

### (Hand waving action detection method)

The action detector 123 extracts an inter-frame difference between frame images of the moving image in which the operator is photographed. For example, the action detector 123 performs processing of extracting the inter-frame difference over 30 frame images, and accumulates each difference. Therefore, the displacing area, namely, the moving area in frame images is extracted. Fig. 2B illustrates a difference accumulation result in which the inter-frame difference between the images is accumulated with respect to the moving image in Fig. 2A in which the hand waving action is photographed. Fig. 2B is an enlarged view of the area Z in Fig. 2A. In Fig. 2B, the accumulated value of the inter-frame difference between the images increases with increasing white intensity. The action detector 123 determines that the hand waving action is detected in the case that the area where the accumulated value of the difference between the images is greater than a predetermined value exists.

### (4. Recognition area definition part 124)

The recognition area definition part 124 corrects the recognition area OE based on an action range monitoring result of the action range monitor 122 and the correction action and setting action detection results of the action detector 123. The correction and the setting of the recognition area OE based on the monitoring result of the action range monitor 122 and the detection results of the action detector 123 will be described below in detail.

### (Setting of recognition area OE by setting action)

In the case that the shape recognizer 121 recognizes the hand having the shape 1, the recognition area definition part 124 sets the recognition area OE after the action detector 123 detects the setting action. At this point, the recognition area definition part 124 sets the recognition area OE based on the difference accumulation result calculated by the action detector 123. Specifically, the recognition area definition part 124 calculates a minimum quadrangular area having sides parallel to the horizontal and vertical directions of the image, which includes all the points (pixels) where the accumulated value of the inter-frame difference between the images is greater than or equal to the predetermined value. The recognition area definition part 124 sets the calculated quadrangular area as the recognition area OE (see Fig. 2B).

In the conventional gesture recognition apparatus disclosed in Japanese Unexamined Patent Publication No. 2003-216955, the face area is calculated and the area where the gesture is recognized is set based on the face area. For this reason, in the case that the operator's face is not photographed in the moving image such that the operator comes excessively close to the moving image photographing part, the area where the gesture is recognized cannot be set in the conventional gesture recognition apparatus. On the other hand, in the gesture recognition apparatus 1 of the first embodiment, the recognition area definition part 124 sets the recognition area OE without specifying the position of the operator's face. Accordingly, even if the operator's face is not photographed in the moving image, the recognition area OE can be set.

### (Correction of recognition area OE by correction action)

When the shape recognizer 121 recognizes the hand having the shape 2, the recognition area definition part 124 corrects the recognition area OE based on the correction action.

The recognition area definition part 124 refers to the recognition area correction table to correct the recognition area OE by a correction content corresponding to the correction action detected by the action detector 123.

In the case that the action detector 123 detects the correction action in which the operator forms the hand shape 2 to orient the stretched fingers (the index finger and the middle finger) toward a certain direction, the recognition area definition part 124 corrects the recognition area OE based on the direction in which the index finger and the middle finger are stretched. For example, when the action detector 123 detects the correction action in which the index finger and the middle finger are oriented toward the left direction or the right direction, the recognition area is enlarged in the left direction or the right direction at a predetermined ratio (for example, 10% of the length in the horizontal direction of the recognition area). When the action detector 123 detects the correction action in which the index finger and the middle finger are oriented upward or downward, the recognition area is enlarged in the upward direction or the downward direction at a predetermined ratio (for example, 10% of the length in the vertical direction of the recognition area). When the action detector 123 detects the correction action in which the index finger and the middle finger are obliquely oriented, the recognition area is enlarged in the horizontal direction and the vertical direction at a predetermined ratio (for example, 10% of the length of each side of the recognition area).

In the correction action, as described above, displacing the hand in the predetermined direction may be used instead of orienting the stretched fingers toward the predetermined direction. In this configuration, the correction content of the recognition area OE may be varied according to the amount of the displacement of the hand when the hand is moved in the predetermined direction. For example, the recognition area definition part 124 may enlarge the recognition area OE at the ratio of 10% in the case that the operator moves the hand within a distance shorter than a predetermined distance, and the recognition area definition part 124 may enlarge the recognition area OE at the ratio of 20% in the case that the operator moves the hand within a distance longer than the predetermined distance.

In addition to the configuration in which the recognition area OE is enlarged, in the case that the operator performs the action in which the hand in which the index finger, the middle finger, and a third finger are stretched is formed to orient the stretched three fingers toward the predetermined direction, the recognition area definition part 124 may reduce the length of the side on the side on which the fingers are stretched in the quadrangle defining the recognition area OE at the ratio of 10% based on the direction in which the fingers are stretched. In such configuration, the hand shape 2 may be defined as the hand in which two or three fingers are stretched. The templates of the hand in which two fingers are stretched and the hand in which three fingers are stretched are previously stored in the storage part 13 as templates of the hand shape 2 for template matching.

The present invention has the following advantages because the operator can correct the recognition area OE through the correction action defined by the shape, the orientation, and the displacement of the hand.

In the case that the operator is located distant from the moving image photographing part 11, resolution of the gesture made by the operator is degraded compared with the case that the operator is located close to the moving image photographing part 11. As a result, accuracy of the gesture recognition is degraded. Therefore, in the case that the operator makes the gesture while being distant from the moving image photographing part 11, it is necessary to enlarge the recognition area in order to keep accuracy of the gesture recognition. However, in the conventional gesture recognition apparatus described in Japanese Unexamined Patent Publication No. 2003-216955 and WO2003/025859, the operator cannot correct the range of the recognition area in the moving image. On the other hand, in the gesture recognition apparatus 1 of the first embodiment, the operator can enlarge the recognition area OE by performing the correction action or the setting action. According to the embodiments of the present invention, the operator can adjust the recognition area OE according to a distance from the moving image photographing part 11 to the operator such that the recognition area OE becomes the proper range.

### (Correction of recognition area OE by action range monitoring result)

When the shape recognizer 121 recognizes the hand having the shape 3, the recognition area definition part 124 corrects the recognition area OE based on the action range monitoring result of the action range monitor 122.

In the case that the action range monitor 122 detects the index finger leading end F of the operator goes out from the recognition area OE, the recognition area definition part 124 enlarges each side of the recognition area OE by a predetermined length, for example, at the ratio of 10% of each side. Alternatively, the recognition area definition part 124 may enlarge the recognition area OE at the ratio of 10% in the right direction or the left direction in the case that the side of the recognition area OE, which is traversed by the index finger leading end F, is the right side or the left side when the index finger leading end F goes out from the recognition area OE. Similarly, the recognition area definition part 124 may enlarge the recognition area OE at the ratio of 10% in the upward direction or the downward direction in the case that the side of the recognition area OE, which is traversed by the index finger leading end F, is the upper side or the lower side when the index finger leading end F goes out from the recognition area OE.

The recognition area definition part 124 may enlarge the recognition area OE in the case that the action range monitor 122 detects that the index finger leading end F goes out from the recognition area OE once or a predetermined number of times, or the recognition area definition part 124 may enlarge the recognition area OE in the case that the action range monitor 122 detects that the index finger leading end F goes out from the recognition area OE at a predetermined frequency (for example, five times in 100 frames). The recognition area definition part 124 may perform correction to enlarge the recognition area OE as above in the case that the action range monitor 122 detects that the index finger leading end F goes out from the recognition area OE at a displacement speed faster than a predetermined value. As used herein, the displacement speed faster than the predetermined value means a speed at which the index finger leading end F is displaced by at least 10% of the length of the side of the recognition area OE between the frames (corresponds to 1/15 second).

### (5. Gesture recognizer 125)

The gesture recognizer 125 performs the gesture recognition by recognizing the position, the shape, the orientation, and the displacement of the hand of the operator in the recognition area OE (OE'). For example, an HMM (Hidden Markov Model) or continuous DP (Dynamic Programming) can be used as a gesture recognition method.

The method in which the HMM is used can be adopted in order to perform the gesture recognition. In the method in which the HMM is used, a model in each type of the gesture recognized by the gesture recognition apparatus 1 is previously stored in the storage part 13 in the form of a gesture database. Then the gesture recognizer 125 calculates a likelihood of each model included in the gesture database with respect to the image input to the gesture recognition apparatus 1. In the case that one or a plurality of models in which the likelihood to the input image is greater than or equal to a predetermined value is discovered, the gesture recognizer 125 transmits the gesture corresponding to the model having the highest likelihood as the gesture recognized from the input image to the display instrument controller 126.

The gesture recognizer 125 measures the displacement of the index finger leading end F in addition to the gesture recognition in which the HMM is used. Therefore, as described later, a pointer P (see Fig. 5) displayed in a display instrument 1000 can work with the action of the index finger leading end F.

### (6. Display instrument controller 126)

The display instrument controller 126 performs control such that the processing corresponding to the gesture recognition result of the gesture recognizer 125 is performed in the display instrument external to the gesture recognition apparatus 1. Particularly, the display instrument controller 126 refers to the gesture-processing content correspondence table, and controls the display instrument such that the processing corresponding to recognized gesture is performed.

A display instrument 1000 controlled by the display instrument controller 126 will be described with reference to Figs. 1 and 5. The display instrument controller 126 transmits a control signal indicating an instruction to perform the processing content determined based on the gesture recognition result to a control functional part (not illustrated) included in the display instrument 1000. The control functional part receives the control signal transmitted from the display instrument controller 126, and performs the processing content. For example, the processing content is processing of causing the pointer P displayed on a display device 2 to work with the index finger leading end F based on the recognition result of the displacement of the index finger leading end F. Alternatively, the processing content may be processing of selecting an icon, which is displayed while overlapping with the pointer P, in the case that the operator makes the gesture by forming a predetermined shape using the operator's hand. Thus, by the simple gesture in which the operator's hand is used, the operator can operate the display instrument 1000 without contacting the screen of the display device 2 or without use of a tool such as a glove.

### (Flow of gesture monitoring processing)

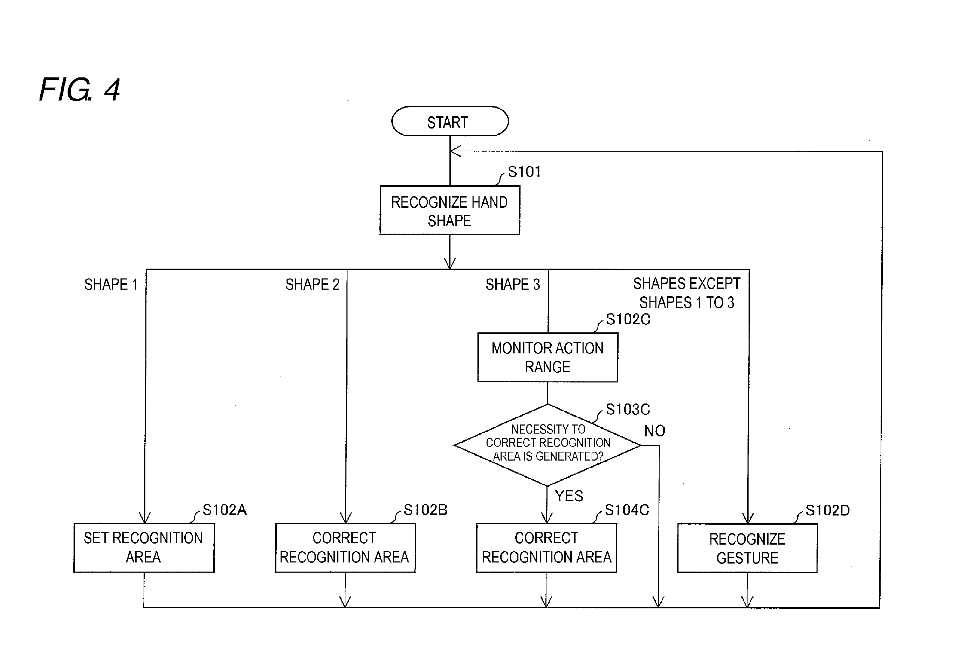

A flow of gesture monitoring processing performed by the controller 12 will be described with reference to a flowchart in Fig. 4. In the gesture monitoring processing, the action range of the index finger leading end F is monitored while the correction action and the setting action are detected in making the gesture with the operator's hand. The recognition area OE is corrected or set based on the correction action, the setting action, and the monitoring result of the action range.
The gesture monitoring processing will be described below in detail.

The shape recognizer 121 recognizes the shape of the hand while the operator makes the gesture using the hand (S101).

In the case that the shape recognizer 121 recognizes the hand having the shape 1, the action detector 123 sets the recognition area OE based on the range of the hand waving action (S102A). In the case that the recognition area OE is already set, the action detector 123 resets the recognition area OE' based on the range of the hand waving action.

In the case that the shape recognizer 121 recognizes the hand shape 2, the recognition area definition part 124 corrects the recognition area OE based on the correction action (S102B).

In the case that the shape recognizer 121 recognizes the hand having the shape 3, the action range monitor 122 monitors whether the index finger leading end F of the hand that operates in order to make the gesture in the recognition area OE goes out from the recognition area OE (S102C). In other words, the action range monitor 122 monitors the action range of the index finger leading end F. At this point, the gesture recognizer 125 performs such gesture recognition that the displacement of the index finger leading end F is measured. While the action range monitor 122 monitors the action range of the index finger leading end F, the recognition area definition part 124 determines whether necessity to correct the recognition area OE is generated (S103C). At this point, particularly the recognition area definition part 124 decides to correct the recognition area OE when the action range monitor 122 detects that the index finger leading end F goes out from the recognition area OE once in a predetermined time or a number of times in the predetermined time which is greater than or equal to a predetermined number of times, or at a frequency greater than or equal to a predetermined value. When the recognition area definition part 124 determines that the necessity to correct the recognition area OE is generated (YES in S103C), the recognition area OE is corrected based on the correction action (S104C). On the other hand, when the recognition area definition part 124 determines that the necessity to correct the recognition area OE is not generated (NO in S103C), the recognition area OE is not corrected.

In the case that the shape recognizer 121 recognizes the shape other than the hand shapes 1 to 3, the gesture recognizer 125 recognizes the gesture made by the operator's hand (S102D).

After Step S102A, S102B, S104C, or S102D is ended, the flow returns to the processing in which the shape recognizer 121 recognizes the shape of the operator's hand (S101).

As described above, the gesture recognition apparatus 1 of at least one embodiment of the present invention defines (sets or corrects) the recognition area OE in the case that the specific hand shapes 1 to 3 are recognized. However, the present invention is not limited to the embodiment. That is, the configuration in which the recognition area definition part 124 defines the recognition area OE based on the type of the gesture made by the operator with the hand is included in the scope of the present invention. Any type of the gesture may be used as long as the type of the gesture is defined by the shape, the orientation, and/or the displacement of the operator's hand making the gesture. Particularly, the hand displacement may be an amount of the displacement, a displacement direction, or a displacement speed of the hand.

### [Second embodiment]

The display instrument 1000 according to a second embodiment of the present invention will be described below with reference to Fig. 5. For the sake of convenience, the member which is identical to that in the drawing of the first embodiment is designated by the identical numeral, and the description is omitted.

### (Configuration of display instrument 1000)

The display instrument 1000 having an exterior in Fig. 5 includes the gesture recognition apparatus 1 and the display device 2. Specifically, the display instrument 1000 is a personal computer. However, the present invention is not limited to this, and alternatively, the display instrument 1000 may be various display instruments, such as a television receiver, an internet television set, and a tablet terminal, which include a control function and a display function.

In Fig. 5, although the gesture recognition apparatus 1 is placed above the display device 2 in Fig. 5, there is no particular limitation to the position where the gesture recognition apparatus 1 is placed. The gesture recognition apparatus 1 may be placed below the display device 2 or on the right or left side of the display device 2, or the gesture recognition apparatus 1 may be configured to be integral with the display device 2. As to the configuration in which the gesture recognition apparatus 1 and the display device 2 are integrally provided, for example, the moving image photographing part 11 may be included in a frame surrounding the screen of the display device 2. In the case that the display device 2 includes a web camera, the web camera can be used instead of the moving image photographing part 11. In this case, the control functional part (not illustrated) of the display instrument 1000 includes the controller 12 of the gesture recognition apparatus 1, thereby implementing the whole of the gesture recognition apparatus 1 in a software manner.

### (Control of display instrument 1000)

In the second embodiment, the display instrument controller 126 controls the display of the display device 2 based on the gesture recognition result acquired from the gesture recognizer 125. For example, the display instrument controller 126 controls the action of the pointer P displayed on the display device 2 in cooperation with the control functional part of the display instrument 1000. Specifically, the pointer P performs the action corresponding to the gesture of the recognition-target object (the hand in which only the index finger is stretched) based on the gesture recognition result of the gesture recognition apparatus 1. For example, when the operator moves the index finger in the recognition area OE, the pointer P works with the distance and the direction of the movement of the index finger in the screen of the display device 2. The operator can operate the pointer P displayed on the screen without contacting the screen of the display device 2 or without use of a tool such as a remote controller.

The detailed processing of the display instrument controller 126 will be described below with a usage example of the display instrument 1000. The operator makes the gesture using the recognition-target object (the hand) in the recognition area OE. The gesture of the recognition-target object is photographed by the moving image photographing part 11, recognized by the gesture recognizer 125, and input to the display instrument controller 126. The display instrument controller 126 transmits a control content of the pointer P, which is determined based on the gesture recognition result, to the control functional part included in the display device 2. The control functional part controls the action of the pointer P displayed on the display device 2 in cooperation with the display instrument controller 126. Alternatively, the display instrument controller 126 may be configured not only to control the displacement of the pointer P but also to be able to cause the control functional part to perform the processing content corresponding to the shape of the recognition-target object. For example, in the case that the operator performs the action to clench fists, the display instrument controller 126 can perform the control such that the icon, which is displayed at the position overlapping with the pointer P, is selected.

As described above, the recognition area is defined based on the determination result of the type of the gesture made by the user. That is, the user can define the recognition area by making the gesture. The type of the gesture may be defined by a shape, an orientation, and/or a displacement of the recognition-target object, which is used to make the gesture by the user. Therefore, the user can set the recognition area with the desired position and the desired size by making the gesture. Using the recognition-target object, the user can correct the recognition area by making the gestures having the different shapes, the different orientations, and/or the different displacements. Because the user can define the recognition area, the user can make the comfortable gesture.

According to the embodiments of the present application, the gesture recognition apparatus may include a storage part in which a hand shape list is stored, the hand shape list including a predetermined hand shape in making the gesture, wherein the gesture is made by a hand of the user, and the determination part refers to the hand shape list to detect the predetermined hand shape.

The type of the gesture made by the user using the hand is determined with the hand shape list. The recognition area is defined based on the determination result. The user can set the recognition area with the desired position and the desired size by making the gesture defined by the shape, the orientation, and/or the displacement of the hand. The user makes the gestures while changing the shape, the orientation, and/or the displacement of the hand, which allows the user to correct the recognition area.

According to the embodiments of the present application, the gesture recognition apparatus may include an action detector that detects a range where the user waves the hand having the predetermined hand shape when the determination part detects the predetermined hand shape, wherein the recognition area definition part defines the recognition area based on the range where the user waves the hand, the range being detected by the action detector.

When the user performs the action to wave the hand, the recognition area is set based on the hand waving range. The user can set the recognition area by the simple action to wave the hand. Additionally, the user can adjust the size and/or the position of the recognition area by adjusting the hand waving range. Therefore, the user can make the gesture within the recognition area that is set to the desired position and the desired size by the user.

According to the embodiments of the present application, the gesture recognition apparatus may include an action range monitor that monitors whether a specific region of the hand goes out from the recognition area by monitoring action of the specific region while the user makes the gesture using the hand having the predetermined hand shape when the determination part detects the predetermined hand shape, wherein the recognition area definition part performs correction so as to enlarge the recognition area at a predetermined ratio when the action range monitor detects that the specific region of the hand goes out from the recognition area.

Whether the specific region of the hand goes out from the recognition area is monitored while the user makes the gesture using the user's hand. When the specific region of the hand goes out from the recognition area, the correction is performed such that the recognition area is enlarged. For example, the specific region of the hand of the operator is a leading end of the index finger of the hand in which only the index finger is stretched.

When making the gesture, the user cannot see the previously-defined recognition area. Therefore, sometimes the user's hand goes out from the recognition area while the user makes the gesture using the hand. The user cannot perform the comfortable operation in the case that the size or the position of the previously-defined recognition area is not suitable for the user. On the other hand, according to the configuration and the method, the recognition area is enlarged at a predetermined ratio when the specific region of the hand with which the user makes the gesture goes out from the recognition area. Accordingly, even if the previously-defined recognition area is excessively narrow, or even if the position of the user is excessively close to or distant from the recognition area, the user can perform the comfortable gesture because the user does not worry that the hand with which the user makes the gesture goes out from the recognition area.

According to the embodiments of the present application, the gesture recognition apparatus may include an action detector that refers to a recognition area correction table to detect a correction content of the recognition area corresponding to at least one of an orientation and a displacement of the hand when the determination part detects the predetermined hand shape, wherein the recognition area correction table is stored in the storage part, at least one of the orientation and the displacement of the hand being correlated with the correction content of the recognition area in the recognition area correction table, and the recognition area definition part corrects the recognition area by the correction content.

When the correction action to correct the recognition area is detected, the recognition area is corrected by the correction content corresponding to the detected correction action. When correcting the recognition area according to a situation or a preference, the user performs the correction action corresponding to the desired correction content. Therefore, the correction action performed by the user is detected to correct the recognition area. For example, the correction content of the recognition area is the size or the position of the recognition area. According to the configuration and the method, in the case that the current recognition area is improper, the user can correct the size or the position of the recognition area by performing the correction action.

According to the embodiments of the present application, the gesture recognition apparatus may include an instrument controller that issues an instruction to an external instrument to perform processing corresponding to a gesture recognition result.

The processing corresponding to the gesture recognition result is performed in the external instrument. For example, the external instrument is a display instrument including a display device.
Therefore, the user can make the gesture to operate the external instrument such as the display instrument.

According to the embodiments of the present application, the gesture recognition apparatus may be achieved by a computer. In this case, a control program that causes the computer to perform each piece of processing of the gesture recognition apparatus controlling method is stored in a non-transitory computer readable medium.

According to the embodiments of the present application, a display instrument includes: the gesture recognition apparatus; and a display device for displaying each piece of information held by the gesture recognition apparatus to a user, in which action is controlled by the gesture recognition apparatus.

Therefore, the gesture recognition apparatus in which the user can define the recognition area can be provided.

The present invention is not limited to the first and second embodiments, but various changes can be made without departing from the scope of the present invention. That is, an embodiment obtained by a combination of technical means disclosed in the first and second embodiments is also included in the technical scope of the present invention.

### [Construction example by software]

Each block of the gesture recognition apparatus 1, particularly each part included in the controller 12 may be constructed by hardware using a logic circuit formed on an integrated circuit (an IC chip), or by software using a CPU (Central Processing Unit).

In the latter case, the gesture recognition apparatus 1 includes the CPU that executes a command of the program implementing each function, the ROM (Read Only Memory) in which the program is stored, the RAM (Random Access Memory) in which the program is expanded, and the storage device (the recording medium), such as a memory, in which the program and various pieces of data are stored. The object of the present invention can also be achieved in a manner such that the recording medium in which a program code (an executable format program, an intermediate code program, and a source program) of the control program for the gesture recognition apparatus 1, which are of the software implementing the above functions, is stored while being readable by a computer is supplied to the gesture recognition apparatus 1, and such that the computer (or the CPU or an MPU) reads and executes the program code recorded in the recording medium.

A non-transitory tangible medium can be used as the recording medium. Examples of the non-transitory tangible medium include tape systems such as a magnetic tape and a cassette tape, disk systems including magnetic disks such as a floppy disk (registered trademark) and a hard disk and optical disks such as a CD-ROM, an MO, an MD, a DVD, and a CD-R, card systems such as an IC card (including a memory card) and an optical card, semiconductor memory systems such as a mask ROM, an EPROM, an EEPROM (registered trademark) and a flash ROM, and logic circuits such as a PLD (Programmable logic device) and an FPGA (Field Programmable Gate Array).

The gesture recognition apparatus 1 may be configured to be able to be connected to a communication network, and the program code may be supplied through the communication network. There is no particular limitation to the communication network as long as the program code can be transmitted through the communication network. Examples of the communication network include the Internet, an intranet, an extranet, a LAN, an ISDN, a VAN, a CATV communication network, a virtual private network, a telephone line network, a mobile communication network, and a satellite communication network. There is no particular limitation to a transmission medium constituting the communication network as long as the program code can be transmitted through the transmission medium. Examples of the transmission medium include wired lines, such as IEEE 1394, a USB, a power-line carrier, a cable TV line, a telephone line, and an ADSL (Asymmetric Digital Subscriber Line), and wireless lines, such as infrared rays, such as IrDA and a remote controller, Bluetooth (registered trademark), IEEE 802.11 wireless, HDR (High Data Rate), NFC (Near Field Communication), DLNA (Digital Living Network Alliance), a mobile phone network, a satellite line, and a terrestrial digital network. The present invention can also be implemented by a mode of a computer data signal buried in a carrier wave, and the computer data signal is one in which the program code is embodied by electronic transmission.

The present invention can be applied to various display instruments including the display device, particularly to a television receiver, a personal computer, and a tablet terminal.

## Claims

1. A gesture recognition apparatus (1) for recognizing a gesture of a user from a moving image in which the user is photographed, comprising:
a determination part (121) configured to determine a type of the gesture; and
a recognition area definition part (124) configured to define a recognition area (OE), which is an area where the gesture is recognized in a whole area of the moving image, based on the type of the gesture determined by the determination part (121).

2. The gesture recognition apparatus (1) according to claim 1, further comprising a storage part (13) configured to store a hand shape list, the hand shape list including a predetermined hand shape in making the gesture,
wherein the gesture is made by a hand of the user, and
the determination part (121) is configured to refer to the hand shape list to detect the predetermined hand shape.

3. The gesture recognition apparatus (1) according to claim 2, further comprising an action detector (123) configured to detect a range where the user waves the hand having the predetermined hand shape when the determination part (121) detects the predetermined hand shape,
wherein the recognition area definition part (124) is configured to define the recognition area (OE) based on the range where the user waves the hand, the range being detected by the action detector (123).

4. The gesture recognition apparatus (1) according to claim 2, further comprising an action range monitor (122) configured to monitor whether a specific region of the hand goes out from the recognition area (OE) by monitoring action of the specific region while the user makes the gesture using the hand having the predetermined hand shape, when the determination part (121) detects the predetermined hand shape,
wherein the recognition area definition part (124) is configured to perform correction so as to enlarge the recognition area (OE) at a predetermined ratio when the action range monitor (122) detects that the specific region of the hand goes out from the recognition area (OE).

5. The gesture recognition apparatus (1) according to claim 2, further comprising an action detector (123) configured to refer to a recognition area correction table to detect a correction content of the recognition area (OE) corresponding to at least one of an orientation and a displacement of the hand when the determination part detects the predetermined hand shape,
wherein the storage part (13) is configured to store the recognition area correction table, the at least one of the orientation and the displacement of the hand being correlated with the correction content of the recognition area (OE) in the recognition area correction table, and
the recognition area definition part (124) is configured to correct the recognition area (OE) by the correction content.

6. The gesture recognition apparatus (1) according to any one of claims 1 to 5, further comprising an instrument controller (126) configured to issue an instruction to an external instrument to perform processing corresponding to a gesture recognition result.

7. A display instrument (1000) comprising:
the gesture recognition apparatus (1) according to claim 6; and
a display device (2) in which operation is controlled by the gesture recognition apparatus (1).

8. A method for controlling a gesture recognition apparatus (1) that recognizes a gesture of a user from a moving image in which the user is photographed, the method comprising:
determining a type of the gesture (S101); and
defining a recognition area (OE), which is an area where the gesture is recognized in a whole area of the moving image, based on the type of the determined gesture (S102A, S102B, S102C).

9. A computer readable medium storing a control program that causes a computer to perform each piece of processing of the gesture recognition apparatus (1) controlling method according to claim 8.
